# EUROPEAN PATENT SPECIFICATION

(11) **EP 1 203 180 B1**
(45) Date of publication and mention of the grant of the patent: **21.10.2009**
(21) Application number: 00904650.9
(22) Date of filing: 03.02.2000
(51) Int. Cl.: F16L 23/00, G01L 19/00

(54) **STABILIZED TAP MOUNTING ASSEMBLY**
STABILISIERTE MONTAGEEINRICHTUNG FÜR WASSERHÄHNE
ENSEMBLE DE MONTAGE DE ROBINET STABILISE

(30) Priority: 19.04.1999 US 129859 P
(43) Date of publication of application: 08.05.2002
(73) Proprietor: Century Industries Company, Halifax, Nova Scotia B3J 2X2 (CA)
(72) Inventor: HUTTON, Peter, B., TX 77019 (US)
(74) Representative: Petraz, Gilberto Luigi
(86) International application number: PCT/US2000/002658
(87) International publication number: WO 2000/063603

(56) References cited:
- US-A- 2 238 169
- US-A- 4 672 728
- US-A- 4 920 626
- US-A- 5 292 155

## Description

### BACKGROUND OF THE INVEVTION

### 1. Field of the Invention

This invention relates to the remote sensing of pressure drops across an orifice plate in a pipeline and particularly to a stabilized tap mounting assembly to facilitate, stabilize and reduce vibration of the transmitter and associated apparatus, such as valved manifold blocks connecting the transmitter to taps on an orifice plate or orifice fitting.

### 2. Description of the Related Art

The gas industry makes extensive use of orifice plates for volume measurements. Orifice plates are artificial constrictions in a pipeline. As a result of this constriction there is a pressure drop from the upstream side of the orifice plate to the downstream side of the orifice plate. There is a relationship between the pressure drop and the amount of gas flowing through the pipeline. The pressure drop can be measured which in turn allows a determination of the flow through the pipeline.

The pressure drop is measured using electronic transmitters. These transmitters actually measure the pressures on both the upstream and downstream sides of the orifice plate and then record the difference between the two. Devices of this type are referred as differential pressure transmitters. There are numerous manufacturers of this type of device (e.g. Rosemount, Honeywell, Foxboro and others).

Orifice plate fittings (such as the type manufactured by Daniel Industries) and orifice flanges (manufactured by Daniel and others) are provided with holes (called taps) both upstream and downstream of the orifice plate. The taps are generally threaded holes, typically 1,27 cm (½") female NPT (National Pipe Thread - a tapered thread designed to seal pressure tight).

It is necessary to incorporate valving systems between the orifice taps and the differential pressure transmitters. These valving systems need to include the following functions. Block valves to isolate the flow through the upstream and downstream taps (generally referred to as the high pressure side and the low pressure side), between the orifice flange or fitting and the transmitter. An equalizer valve, or valves, to control the connection between the high pressure passages and the low pressure passages. A vent valve, or valves, to allow trapped pressures to be bled off or to allow the passages to be purged of entrapped gases or liquids. Sometimes the vent valve(s) are incorporated into the transmitters.

The natural gas industry has evolved a number of specifications and requirements to minimize errors in the measurement of flow and to provide improved accuracy and response time. Some of these are:
1. The closer the transmitter is to the orifice plate the better.
2. The orifice size through the valving system from the orifice taps to the transmitter must be 9,53 mm (⅜") in diameter.
3. The flow passages between the orifice taps to the transmitter should be as straight as possible. The ideal is a straight through passage. One 90 degree turn in the flow passage is permitted.

Another consideration is mounting the valve system and the transmitters to the orifice plate assembly. Conventional mounting, valving, and transmitter assemblies can weigh 18,12 kg (40 pounds) and, depending on the complexity of the assembly and the products used, up to 31,71 kg (70 pounds). The pipeline system and the orifice flanges or fittings are subject to vibration. The valving and transmitter assemblies also tend to be leaned on by the instrumentation personnel.

Thus, there is a continuing need to provide an alternative connection method and apparatus to operatively fluidly couple the high and lower pressure taps about an orifice plate with a transmitter.

### SUMMARY OF THE INVENTION

The device of the invention has been developed to provide a stabilized mount to permit conventional manifold/transmitter assemblies to be attached to orifice fittings. The novelty of this device is restricted to the stabilizing mount itself. The manifold shown in the attached drawings is commercially available through Century Valve and Machine of Calgary, Alberta, Canada and others.

The stabilized tap assembly is designed to mount to both orifice fittings (as manfactured by Daniel and others) as well as orifice flanges.

### BRIEF DESCRIPTION OF THE DRAWINGS

Fig. 1 is an exploded view of a typical transmitter and block manifold assembly for use with the stabilizing taps of the invention;

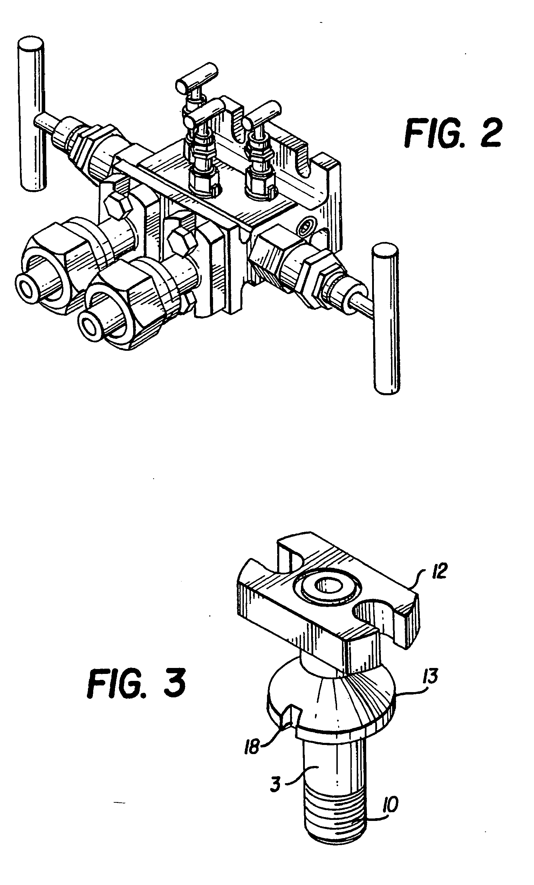

Fig. 2 is a schematic assembled view of the taps of the invention with a conventional manifold.
Fig. 3 is an enlarged view of the taps of the invention of Figs 1 and 2 to show detail thereof;
Fig. 4 is a schematic side view of the stabilizing tube of Figs. 1-2.
Fig. 5 is a top view of the stabilizing tube of Fig. 4.
Fig. 6 is a section along A-A of Fig. 4 of the stabilizing tube.
Fig. 7 is a schematic cross section of a flange shoe for use in mounting the tap of the invention on an orifice flange; and
Fig. 8 is a cross sectional assembled view of the tap and flange shoe on an orifice flange.

### DESCRIPTION OF THE PREFERRED EMBODOMENTS

There are two tap assemblies required for each manifold (4) installation. Each tap assembly consists of three pieces. The tap (3), the stabilizing tube (2) and the stabilizing nut (1). The tap consists of a male NPT threaded end (I) and a flanged end (12). The flanged end (12) is for attachment to a conventional manifold (4). The tap (3) also includes a stabilizing flange (13) which is integral with the tap (3) and which is located between the NPT thread end (10) and the manifold connection flanged end (12).

The tap (3) is installed as follows. The stabilizing tube (2) and the stabilizing nut (1) are threaded together. The tap (3) is inserted through bore (14) in the stabilizing tube (2) and the stabilizing nut (1). The tap (3) is threaded into the orifice fitting (5). One end of the stabilizing tube (2) has a flat surface (15) with two projections (16)(17). These two projections (16)(17) fit into mating recesses (18)(19) on the stabilizing flange (12) located on the tap (3). The stabilizing nut (1) is turned on the stabilizing tube (2). The projections (16)(17) on the stabilizing tube (2) prevent the stabilizing tube (2) from turning relative to the tap (3). The lower end of the stabilizing nut (1) is forced against the orifice fitting (5) while the upper end of the stabilizing tube (2) is forced against stabilizing flange (12) on the tap (3), When the assembly of stabilizing nut (1) and stabilizing tube (2) is placed in compression, the loads are transferred from the NPT threads of tap (3), via the stabilizing flange (12), onto the stabilizing tube (2) and stabilizing nut (1), which in turn bears on the orifice fitting (5).

Precision General Inc. (PGI) manufactures a stabilized futbol device which is covered by their patent US 4,920,626. In PGI's device the tap itself is threaded and the jam nut threads directly onto the tap.

In the invention, the stabilized tap assembly transfers the imposed loads through a larger area (the stabilizing flange), rather than just threads on the tap. As a result, there are lower stresses imposed on our tap rather than on PGI tap threads.

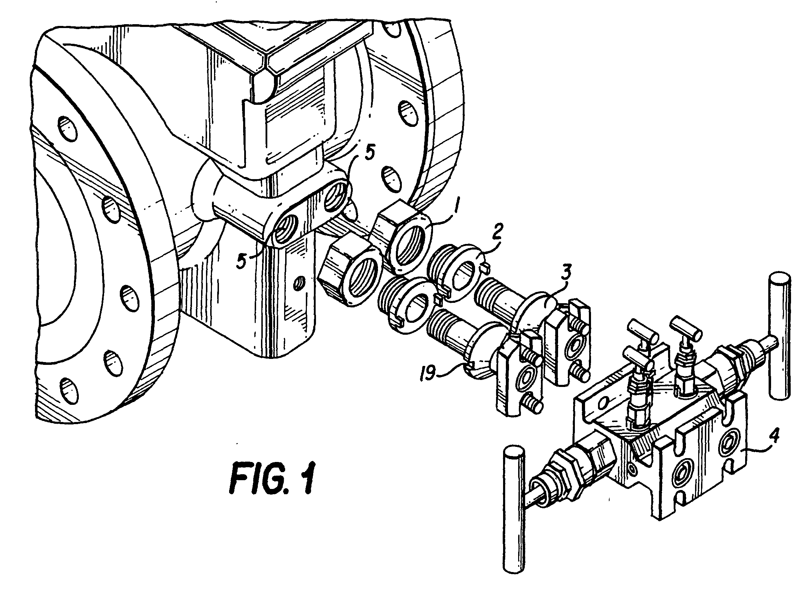

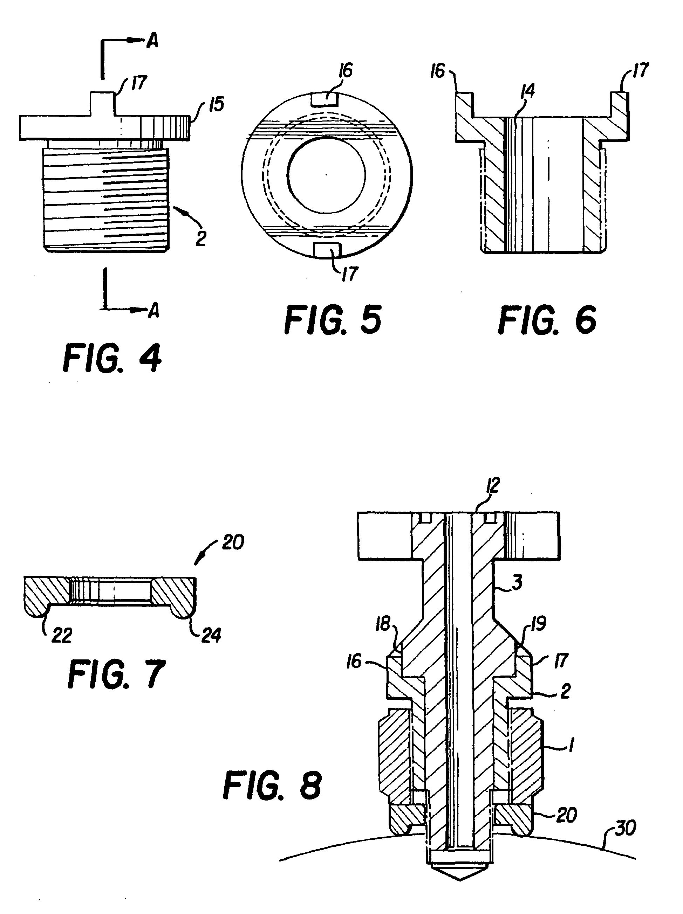

The same stabilized tap assembly can be used with orifice flanges (30) (instead of the orifice taps of Fig. 1) by using a flange shoe (20) (Fig. 7). The flange shoe (20) is shown on the cross sectional view of Fig. 8. The device works the same as described above except that the stabilizing nut (1) bears on the flange shoe (20). The flange shoe has two projections (22)(24) along opposite sides. Those projections are rounded, as shown on the drawings, and those projections bear on the flange. The flange shoe can be designed to fit all flange sizes and ratings.

It will be apparent to those skilled in the art that many modifications can be made to the invention without departing from the scope of the appended claims.

## Claims

1. A tap assembly comprising:
(a) a tap (3) comprising a male NPT (National Pipe Thread - a tapered thread designed to seal pressure tight) threaded end and a flanged end (12);
(b) a stabilizing tube (2) having an external thread;
(c) a stabilizing nut (1) threaded on said stabilizing tube (2).

2. The tap assembly of claim 1, wherein the tap (3) is further provided with a stabilizing flange (13) integral with the tap (3).

3. The tap assembly of claim 2, wherein the stabilizing flange (13) is provided intermediate the threaded end and flanged end (12).

4. The tap assembly of claim 2, wherein the stabilizing tube (2) has at least one projection (16, 17) interfitting with a recess (18, 19) in the stabilizing flange (13).

5. The tap assembly of claim 4, wherein the said at least one projection comprises two projections (16, 17) interfitting with two mating recesses (18, 19) in the stabilizing flange (13),

6. The tap assembly of claim 1, further comprising a manifold (4) attached to the flanged end (12) of said tap (3).

7. The tap assembly of claim 1; further comprising a pressure transmitter attached to the flanged end (12) of said tap (3).

8. The tap assembly of claim 6, further comprising a pressure transmitter attached to the manifold (4).

9. A method of transferring the load on the threads of a pressure tap to a larger area than just the threads of the pressure tap, said method comprising:
(a) providing a tap (3) having at one end male NPT threads and at the other end a flange and intermediate thereto a stabilizing flange (13);
(b) providing a threaded stabilizing tube (2);
(c) threading a stabilizing nut (1) on said stabilizing tube (2);
(d) threading said NPT threads into a source of pressure; and
(e) unthreading said stabilizing nut (1) on said stabilizing tube (2) to expand the stabilizing tube (2) and stabilizing nut (1) into a state of compression thereby transferring at least some of the load from the NPT threads to the stabilizing flange (13).

10. The method of claim 9, wherein the source of pressure is an orifice plate fitting (5).

11. The method of claim 9, wherein the source of pressure is an orifice flange.

12. The method of claim 11, further comprising placing a flange shoe (20) between said orifice flange and said stabilizing nut (1).

13. The method of claim 9, further comprising attaching a manifold (4) to said end flange.

14. The method of claim 13, further comprising attaching a pressure transmitter to said manifold (4).

15. The method of claim 9, further comprising attaching a pressure transmitter to said end flange.

16. The method of claim 9, further comprising engaging at least one protrusion (16, 17) on said stabilizing tube (2) with at least one mating recess (18, 19) on said stabilizing flange (13).

17. The method of claim 9, further comprising engaging two protrusions (16, 17) on said stabilizing tube (2) with two mating recesses (18, 19) on said stabilizing flange.

18. The tap of claim 1, further comprising a flange shoe (20).

## Patentansprüche

1. Hahnanordnung, enthaltend:
(a) einen Hahn, enthaltend ein Gewindeende mit einem Außen-NPT (National Pipe Thread - ein konisches Gewinde, das derart beschaffen ist, dass es druckfest abdichtet) und ein Flanschende (12);
(b) ein Stabilisierungsrohr (2), das ein Außengewinde hat, und
(c) eine Stabilisierungsmutter (1), die auf das Stabilisierungsrohr (2) geschraubt ist.

2. Hahnanordnung nach Anspruch 1, wobei der Hahn (3) weiterhin mit einem Stabilisierungsflansch (13) versehen ist, der integraler Bestandteil des Hahns (3) ist.

3. Hahnanordnung nach Anspruch 2, wobei der Stabilisierungsflansch (13) zwischen dem Gewindeende und dem Flanschende (12) vorgesehen ist.

4. Hahnanordnung nach Anspruch 2, bei der das Stabilisierungsrohr (2) wenigstens einen Vorsprung (16, 17) hat, der mit einer Aussparung (18, 19) im Stabilisierungsflansch (13) in Eingriff steht.

5. Hahnanordnung nach Anspruch 4, bei dem der wenigstens eine Vorsprung zwei Vorsprünge (16, 17) enthält, die mit zwei passenden Aussparungen (18, 19) im Stabilisierungsflansch (13) in Eingriff stehen.

6. Hahnanordnung nach Anspruch 1, weiterhin enthaltend einen Verteiler (4), der am Flanschende (12) des Hahns (3) angebracht ist.

7. Hahnanordnung nach Anspruch 1, weiterhin enthaltend einen Druckmessumformer, der am Flanschende (12) des Hahns (3) angebracht ist.

8. Hahnanordnung nach Anspruch 6, weiterhin enthaltend einen Druckmessumformer, der am Verteiler (4) angebracht ist.

9. Verfahren zum Übertragen der Kraft auf die Gewinde eines Druckhahns auf eine größere Fläche als lediglich die Gewinde des Druckhahns, wobei das Verfahren umfasst:
(a) Bereitstellen eines Hahns (3), der am einen Ende NPT-Außengewinde und am anderen Ende einen Flansch und dazwischen einen Stabilisierungsflansch (13) hat;
(b) Bereitstellen eines Stabilisierungsrohres (2) mit Gewinde;
(c) Schrauben einer Stabilisierungsmutter (1) auf das Stabilisierungsrohr (2);
(d) Schrauben der NPT-Gewinde in eine Druckquelle und
(e) Abschrauben der Stabilisierungsmutter (1) auf dem Stabilisierungsrohr (2), um das Stabilisierungsrohr (2) zu erweitern, und der Stabilisierungsmutter (1) in einen Druckzustand, wodurch wenigstens ein Teil der Kraft von den NPT-Gewinden auf den Stabilisierungsflansch (13) übertragen wird.

10. Verfahren nach Anspruch 9, bei dem die Druckquelle ein Messblendenpassstück (5) ist.

11. Verfahren nach Anspruch 9, bei dem die Druckquelle ein Öffnungsflansch ist.

12. Verfahren nach Anspruch 11, weiterhin umfassend das Plazieren eines Flanschschuhs (20) zwischen dem Öffnungsflansch und der Stabilisierungsmutter (1).

13. Verfahren nach Anspruch 9, weiterhin umfassend das Anbringen eines Verteilers (4) am Stirnflansch.

14. Verfahren nach Anspruch 13, weiterhin umfassend das Anbringen eines Druckmessumformers am Verteiler (4).

15. Verfahren nach Anspruch 9, weiterhin umfassend das Anbringen eines Druckmessumformers am Stirnflansch.

16. Verfahren nach Anspruch 9, weiterhin umfassend das Ineingriffbringen wenigstens eines Vorsprungs (16, 17) am Stabilisierungsrohr mit wenigstens einer passenden Aussparung (18, 19) am Stabilisierungsflansch (13).

17. Verfahren nach Anspruch 9, weiterhin umfassend das Ineingriffbringen zweier Vorsprünge (16, 17) am Stabilisierungsrohr (2) mit zwei passenden Aussparungen (18, 19) am Stabilisierungsflansch.

18. Hahn nach Anspruch 1, weiterhin enthaltend einen Flanschschuh (20).

## Revendications

1. Ensemble de robinet comprenant:
a) un robinet (3) comprenant une extrémité filetée mâle NPT (Filetage de Tube National - un filetage conique conçu pour établir une pression étanche) et une extrémité bridée (12);
b) un tube de stabilisation (2) ayant un filetage externe;
c) un écrou de stabilisation (1) vissé sur ledit tube de stabilisation (2).

2. Ensemble de robinet selon la revendication 1, où le robinet (3) présente en outre une bride de stabilisation (13) intégrale avec le robinet (3).

3. Ensemble de robinet selon la revendication 2, où la bride de stabilisation (13) est réalisée entre l'extrémité filetée et l'extrémité bridée (12).

4. Ensemble de robinet selon la revendication 2, où le tube de stabilisation (2) possède au moins une saillie (16, 17) s'ajustant dans un évidement (18, 19) dans la bride de stabilisation (13).

5. Ensemble de robinet selon la revendication 4, où ladite au moins une saillie comprend deux saillies (16, 17) s'ajustant dans deux évidements appariés (18, 19) dans la bride de stabilisation (13).

6. Ensemble de robinet selon la revendication 1, comprenant en outre un collecteur (4) fixé à l'extrémité bridée (12) dudit robinet (3).

7. Ensemble de robinet selon la revendication 1, comprenant en outre un transmetteur de pression fixé à l'extrémité bridée (12) dudit robinet (3).

8. Ensemble de robinet selon la revendication 6, comprenant en outre un transmetteur de pression fixé au collecteur (4).

9. Procédé pour transférer la charge aux filets d'un robinet manométrique à une plus grande zone que simplement les filets du robinet manométrique, ledit procédé comprenant:
a) réaliser un robinet (3) ayant à une extrémité des filetages mâles NPT et à l'autre extrémité une bride et entre ceux-ci une bride de stabilisation (13);
b) réaliser un tube de stabilisation fileté (2);
c) visser un écrou de stabilisation (1) sur ledit tube de stabilisation (2);
d) visser lesdits filetages NPT dans une source de pression; et
e) dévisser ledit écrou de stabilisation (1) sur ledit tube de stabilisation (2) pour dilater le tube de stabilisation (2) et l'écrou de stabilisation (1) dans un état de compression en transférant ainsi au moins une partie de la charge des filetages NPT à la bride de stabilisation (13).

10. Procédé selon la revendication 9, dans lequel la source de pression est un raccord de plaque d'orifice (5).

11. Procédé selon la revendication 9, dans lequel la source de pression est une bride d'orifice.

12. Procédé selon la revendication 11, comprenant en outre le placement d'un patin de bride (20) entre ladite bride d'orifice et ledit écrou de stabilisation (1).

13. Procédé selon la revendication 9, comprenant en outre la fixation d'un collecteur (4) à ladite bride d'extrémité.

14. Procédé selon la revendication 13, comprenant en outre la fixation d'un transmetteur de pression audit collecteur (4).

15. Procédé selon la revendication 9, comprenant en outre la fixation d'un transmetteur de pression à ladite bride d'extrémité.

16. Procédé selon la revendication 9, comprenant en outre la mise en prise de ladite au moins une saillie (16, 17) sur ledit tube de stabilisation (2) avec au moins un évidement apparié (18, 19) sur ladite bride de stabilisation (13).

17. Procédé selon la revendication 9, comprenant en outre la mise en prise de deux saillies (16, 17) sur ledit tube de stabilisation (2) avec deux évidements appariés (18, 19) sur ladite bride de stabilisation.

18. Robinet selon la revendication 1, comprenant en outre un patin de bride (20).
